# EUROPEAN PATENT APPLICATION

(11) **EP 2 602 130 A1**
(43) Date of publication of application: **12.06.2013**
(21) Application number: 11192803.2
(22) Date of filing: 09.12.2011
(51) Int. Cl.: B60C 23/04

(54) **Tire pressure monitor**

(71) Applicant: Josn Electronic Co., Ltd., New Taipei City 241 (TW)
(72) Inventor: Liao, Wen-Ping, New Taipei City 241 (TW)
(74) Representative: Chaillot, Geneviève

(57) **Abstract**

A tire pressure monitor (80) enables the TPMS (Tire Pressure Monitoring System) in a tire (20) to detect and send a tire pressure signal from an air faucet (40) to the outer side of the wheel rim (21) by an antenna connecting line (70), and uses an insulation sleeve (50) to isolate an electrical transmission between the air faucet (40) and an external air faucet (60) so that the whole external air faucet (60) becomes an insulating and independent transmitting antenna (A) which can be unaffected by the serious shield from the wheel rim (21) or steel wire annulus (22). Therefore, the tire pressure can be measured directly by the tire pressure detector inside of the tire (20) and the transmitting signal can be sent accurately to the receiver in the vehicle in order to enhance the reliability of measuring tire pressure and driving safety.

## Description

### BACKGROUND OF THE INVENTION

### 1. Field of the Invention:

The present invention relates to a tire pressure monitor and more particularly, to a tire pressure detector installed inside a tire, which provides an insulation sleeve to isolate the electrical transmission between an external air faucet and the tire pressure detector so that the external air faucet becomes an independent transmitting antenna being unaffected by the shield from the steel wire tire.

### 2. Description of the Related Art:

After some time of driving, exposure to the sunlight or the fall of temperature at night, the tire may lead to some extent and the tire pressure will fall down under a normal pressure of 28 psi. It brings a potential danger for the driving safety. Particularly, if one tire of a high speeding vehicle due to the insufficient tire pressure breaks up, the result is very destructive.

Therefore, plenty of researchers have been devoting to developing this kind of detecting and monitoring devices that monitor the tire pressure during driving. Such disclosures include TW 536489, TW 400811, TW 149143, TW 177543, TW 560445, TW 574977, TW 090946, TW 100539, TW 396974, etc. The working principles of above mentioned patents can be divided into electronic detecting and mechanical detecting groups. The life span of the mechanical one is relatively shorter, and the device body is bigger and the detecting precision is not good at the same time. Such kind of mechanical detecting devices is not the object of the invention so that no further descriptions thereto are given hereinafter.

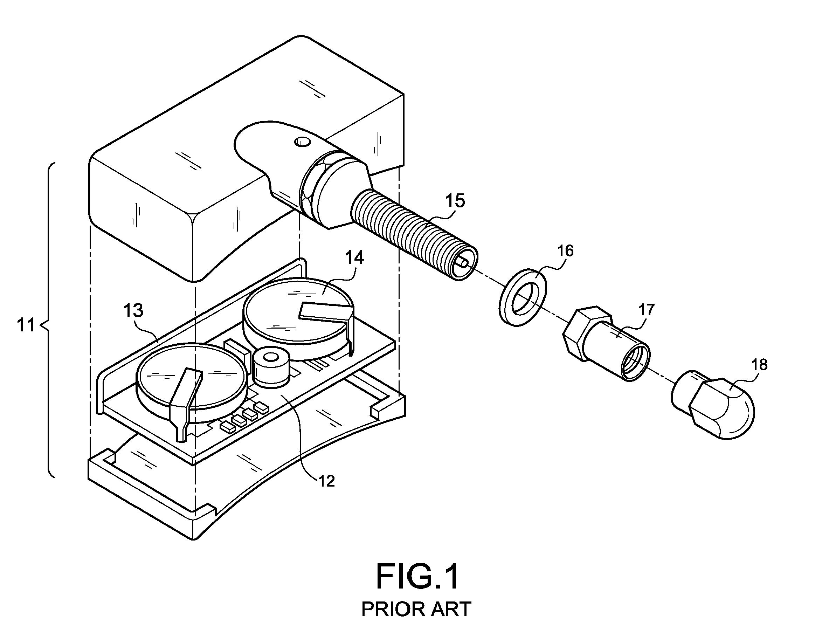

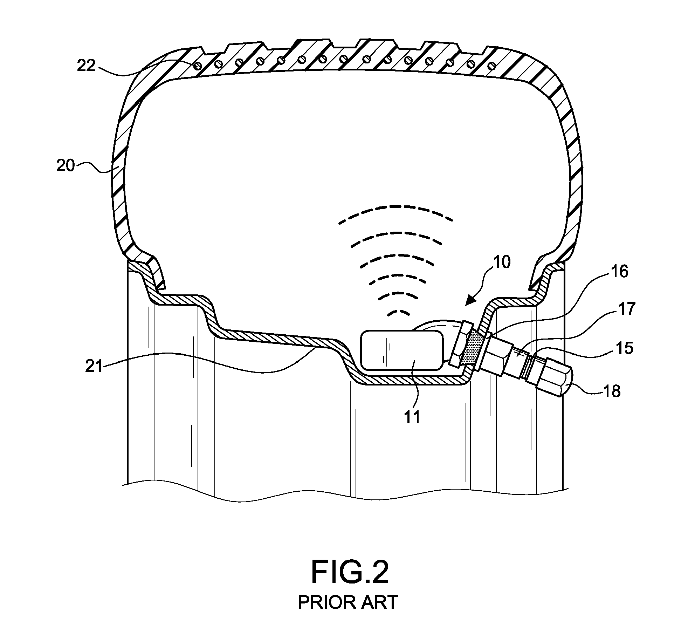

The most popular design of electronic tire pressure detecting apparatus is installed in the steel wheel rim for the tire. Such kind of apparatus has been disclosed in TW 404354, TW 578706, TW 578707, etc. The advantage of the design is that the tire pressure can be measured directly by the tire pressure monitoring apparatus inside of the tire. The main structure is shown in FIGS. 1 and 2. It consists of a body **11** and a detecting circuit board **12** which is set in the body **11.** This circuit board **12** has a signal transmission antenna **13** and two batteries **14** which supply power to this circuit board **12.** In the front of the body, an air inlet **15** is mounted. When the above described components are assembled into a tire pressure monitoring apparatus **10** (shown in the FIG 2), the whole set will be fixed on a steel wheel rim **21** inside of the tire **20.** The air inlet **15** penetrates this steel wheel rim **21** and it is fastened by a plate **16** and a screw **17.** At last a protecting head **18** will be screwed up and the assembly is finished.

The above mentioned conventional tire pressure monitoring apparatus **10** will transmit a signal through the signal transmission antenna **13,** when it detects an abnormal tire pressure. The warning signal will be received by a receiver (not shown in the drawings) in the vehicle and the driver acquires a message about the abnormal tire pressure. However, the signal transmission antenna **13** is mounted in the tire **20** structured with a plurality of layers and with a steel wire annulus **22.** Thus, the wireless signal, when being transmitted, is covered by the steel wire annulus **22** inside the tire, due to an electromagnetic eave, or the transition of wireless signal is interfered by the wheel rim **21,** thereby accuracy and reliability being poor, which is the defect of this mentioned tire pressure monitoring apparatus.

Although some researchers try to extend the signal transmission antenna **13** to the air inlet **15** outside of the wheel rim **21,** the signal still could not be sent out of the tire **20.** It is the problem of prior designs which cannot effectively transmit the signal. Therefore, it is desirable to provide a tire pressure monitor, which achieves effective transmission effect.

### SUMMARY OF THE INVENTION

It is a primary object of the present invention to provide a tire pressure monitor, which enables the TPMS (Tire Pressure Monitoring System) in the tire to detect and send a tire pressure signal from the air faucet to the outer side of the wheel rim by the antenna connecting line, and uses the insulation sleeve to isolate the electrical transmission between the air faucet and the external air faucet so that the whole external air faucet becomes an insulating and independent transmitting antenna which is unaffected by the serious shield from the wheel rim or steel wire annulus; therefore, the tire pressure can be measured directly by the tire pressure detector inside of the tire and the transmitting signal can be sent accurately to the receiver in the vehicle.

In order to achieve the above-mentioned object, the invention includes a tire pressure detector having a body, the body being provided on a wheel rim inside a tire, and a tire pressure monitor PCB being provided in the body; an air faucet made of metal and provided at a front end of the tire pressure detector, the outside of the air faucet being in the form of threads, a leakproof cushion being set around the root, the air faucet being clamped with a screw nut after an external part of the air faucet passes through a piercing hole of the wheel rim so that a first conducting hole being axially formed, and the external part of the first conducting hole is formed into a first connector; an antenna connecting line having both ends pass through the first conducting hole, and an inside end thereof electrically connecting an antenna contact on the tire pressure monitor PCB; an external air faucet made of metal conductor, a second conducting hole being axially provided in the external air faucet, the internal part of the second conducting hole is formed into a second connector corresponding to the first connector of the first conducting hole, the second connector and the first connector being connected end to end, and electrically connecting an outside end of the antenna connecting line, and an air faucet bolt being provided outside of the second conducting hole; and an insulation sleeve having an axial hole and being provided between the first connector and the second connector in order to isolate the electrical transmission ion between the air faucet and the external air faucet so that the external air faucet being formed to be an independent transmitting antenna without an interference from the tire.

Based on the technical features disclosed, the preferred embodiment includes the internal diameter of the first connector being larger than the external diameter of the second connector for the second connector to extend into the internal diameter of the first connector, and the insulation sleeve being fixed between the internal diameter of the first connector and the external diameter of the second connector.

Another preferred embodiment includes the external diameter of the first connector being smaller than the internal diameter of the second connector for the first connector to extend into the internal diameter of the second connector, and the insulation sleeve being fixed between the external diameter of the first connector and the internal diameter of the second connector.

Whereby, the present invention enables the external air faucet to be an independent transmitting antenna by using the insulation sleeve. When transmitting the wireless signal, the receiver in the vehicle accurately receives the tire pressure detected signal without the interference from the tire or the wheel rim to enhance the reliability of measuring tire pressure and driving safety.

### BRIEF DESCRIPTION OF THE DRAWINGS

The accomplishment of this and other objects of the invention will become apparent from the following descriptions and its accompanying drawings of which:
FIG 1 is a perspective exploded view of a conventional tire pressure monitor;
FIG. 2 is a reference view of a service condition of the conventional tire pressure monitor;
FIG 3 is a perspective exploded view of the present invention;
FIG 4 is a perspective assembly drawing of the present invention;
FIG 5 is an exploded sectional view of the present invention;
FIG 6 is an exploded assembly drawing of the present invention
FIG. 7 is a sectional view of another embodiment of the present invention; and
FIG. 8 is a reference view of a service condition of the invention.

### DETAILED DESCRIPTION OF THE PREFERRED EMBODIMENT

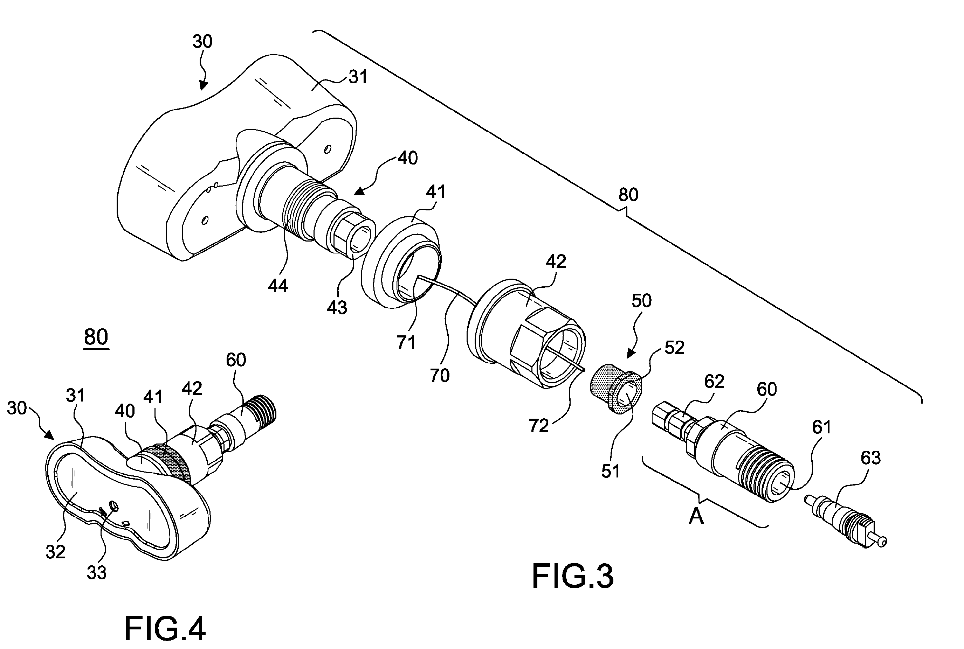

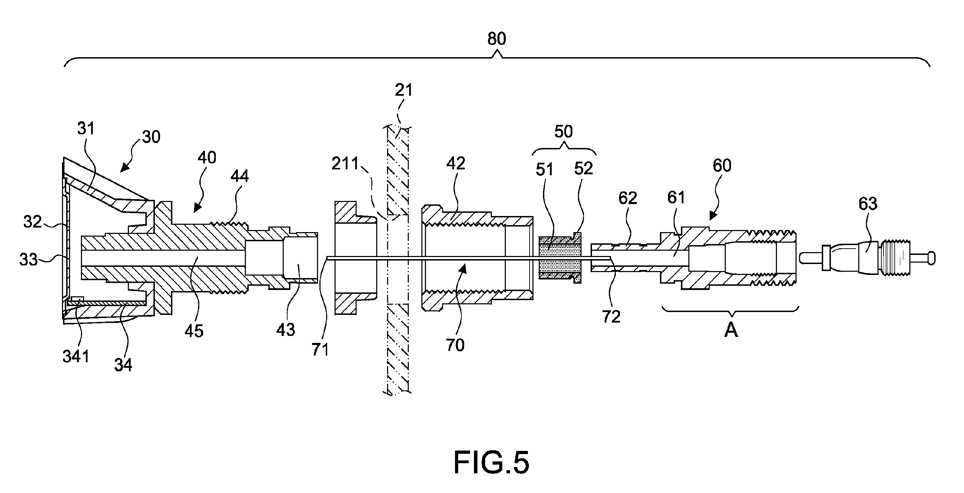

Referring to FIGS. 3 through 7, the preferred embodiment of a tire pressure monitor in accordance with the present invention comprises a tire pressure detector **30,** an air faucet **40,** an antenna connecting line **70,** an external air faucet **60,** and an insulation sleeve **50.**

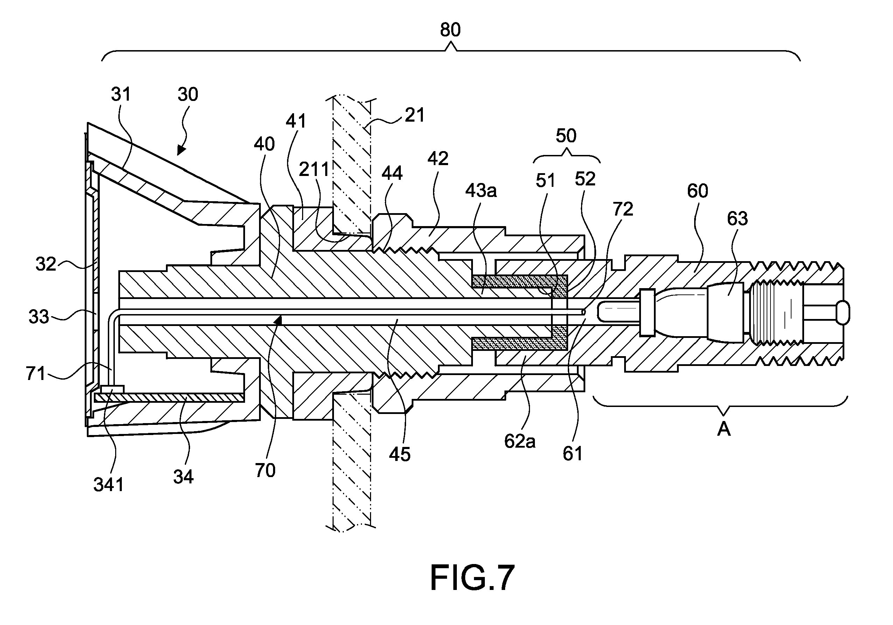

The tire pressure detector **30** has a body **31** which is provided on a wheel rim **21** inside a tire **20.** With reference to FIG. 7, a tire pressure monitor PCB **34** and an antenna contact **341** are provided in the body **31.** A circuit of the TPMS (Tire Pressure Monitoring System) and IC are set on the tire pressure monitor PCB **34.** However, TPMS is not the feature of the present invention so it is not to be illustrated in this specification.

The air faucet **40** made of metal has a sufficient mechanic strength. With reference to FIG 3, the air faucet **40** is provided at a front end of the tire pressure detector **30,** the outside thereof is in the form of threads **44,** and a leakproof cushion **41** is set around the root. The air faucet **40** is clamped with a screw nut **42** after an external part of the air faucet **40** passes through a piercing hole **211** of the wheel rim **21** so that a first conducting hole **45** is axially formed, and the external part of the first conducting hole **45** is formed into a first connector **43.**

The antenna connecting line **70** has both ends passing through the first conducting hole **45,** and an inside end **71** thereof electrically connects the antenna contact **341** on the tire pressure monitor PCB **34.**

The external air faucet **60** is made of metal conductor. A second conducting hole **61** is axially provided in the external air faucet **60** and the internal part of the second conducting hole **61** is formed into a second connector **62** corresponding to the first connector **43** of the first conducting hole **45.** The second connector **62** and the first connector **43** are connected end to end, and electrically connecting an outside end **72** of the antenna connecting line **70.** Further, an air faucet bolt **63** is provided outside of the second conducting hole **61.** In the preferred embodiment, the inside end **71** of the antenna connecting line **70** electrically connects the antenna contact **341** on the tire pressure monitor PCB **34** after the outside end **72** of the antenna connecting line **70** is fixed in the second conducting hole **61** of the external air faucet **60** and passes through the first conducting hole **45.** Further, a cover plate **32** is provided on the back side of the body **31** of the tire pressure detector **30** for fixing on the tire pressure detector **30** after the antenna connecting line **70** finishes setting. In the preferred embodiment, more than one through hole **33** is provided on the cover plate **32** for measuring the air pressure in the tire **20.** However, the position of the through hole **33** can also be provided on the body **31** of the tire pressure detector **30** as long as the air pressure can be measured.

The aforesaid air faucet **40** must have enough mechanic strength in order to be fixed on the wheel rim **21.** Thus, there will be an electrical transmission when the external air faucet **60** is directly connected to the air faucet **40.** After several tests, the inventor found out that if the external air faucet **60** is not separated from the air faucet **40,** the whole external air faucet **60** will be affected by the tire **20** and the wheel rim **21** so that the signal cannot be transmitted effectively.

Therefore, the main feature of the present invention is an insulation sleeve **50** having an axial hole and being provided between the first connector **43** and the second connector **62.** In this embodiment, the insulation sleeve **50** is an independent molding arranged on the outside of the first connector **43** but it is not a limitation. The insulation sleeve **50** can also be an injection molding coated outside of the second connector **62.** In this embodiment, the internal diameter of the first connector **43** is larger than the external diameter of the second connector **62** for the second connector **62** to extend into the internal diameter of the first connector **43,** and the insulation sleeve **50** is fixed between the internal diameter of the first connector **43** and the external diameter of the second connector **62.**

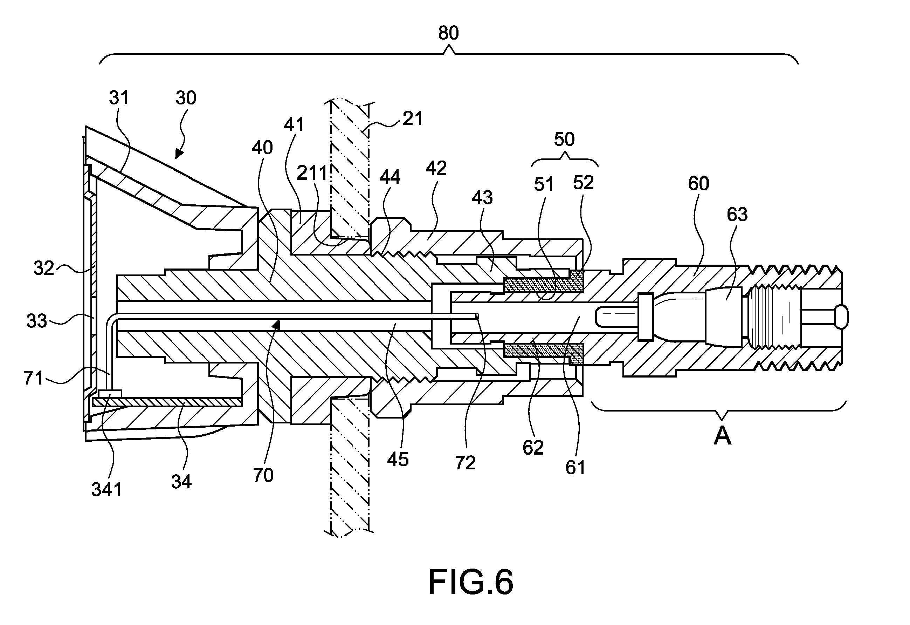

The insulation sleeve **50** is made of rubber, plastic or any kind of insulating materials. In the preferred embodiment, the inner margin surface of the outside end of the first conducting hole **45** is in the form of the crew threads, close fit or tenon while the outside of the insulation sleeve **50** is in the form of the threads, close fit or tenon for connecting to each other. In this embodiment, the outer side surface of the insulation sleeve **50** has a flange **52** for separating the air faucet **40** from the external air faucet **60** but it is not a limitation. The flange **52** shown as in FIG.6 is outward extended in a radial direction.

FIG 7 illustrates another embodiment having the same structure as the aforesaid embodiment, wherein the external diameter of the first connector **43a** is smaller than the internal diameter of the second connector **62a** for the first connector **43a** to extend into the internal diameter of the second connector **62a,** and the insulation sleeve **50** is fixed between the external diameter of the first connector **43a** and the internal diameter of the second connector **62a.** The insulation sleeve **50** is also provided for separating the air faucet **40** from the external air faucet **60** and the outer side surface of the insulation sleeve **50** has a flange **52** inward extended in a radial direction.

As the air faucet **40** and the external air faucet **60** are connected by the non-metallic insulation sleeve **50,** the connection strength is not strong enough. Therefore, the aforesaid connection method shows that the second connector **62** extends into the first connector **43** and the first connector **43a** extends into the second connector **62a** for fixing the insulation sleeve **50** between the first and the second connector. The result of practical test shows that the connection strength of the above-mentioned connection structure is similar to the mechanic strength of the general air faucet so that the air faucet **40** and the external air faucet **60** can be tightly connected.

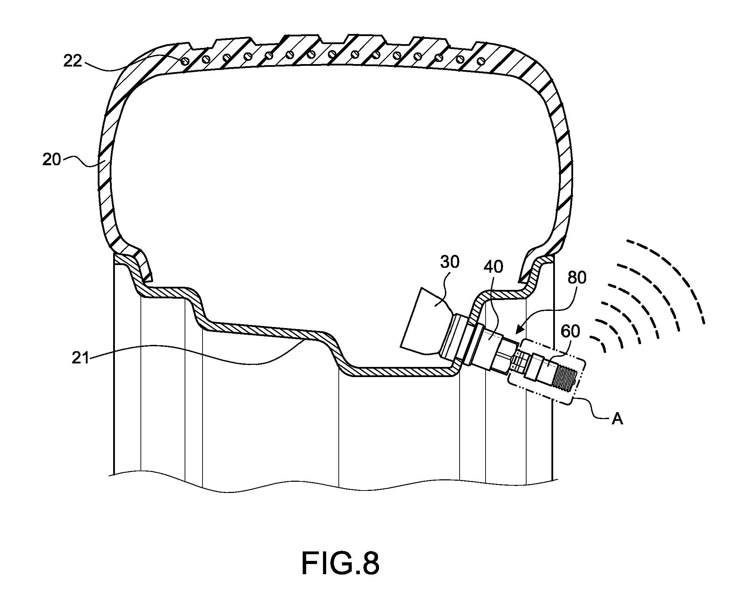

Based on the technical features disclosed, the present invention as shown in FIGS. 6 to 8, the prior air faucet is separated into two parts, the air faucet **40** and the external air faucet **60,** and the insulation sleeve **50** is provided for isolating the electrical transmission between the air faucet **40** and the external air faucet **60** so that the external air faucet **60** is formed to be an independent transmitting antenna **A** which is unaffected by the interference from the tire **20** or the wheel rim **21.**

Therefore, the tire pressure monitor **80** in accordance with the present invention enables the external air faucet **60** to be an independent transmitting antenna **A** by using the insulation sleeve **50.** When transmitting the wireless signal, the receiver in the vehicle accurately receives the tire pressure detected signal without the interference from the tire **20** or the wheel rim **21** to enhance the reliability of measuring tire pressure and driving safety.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A tire pressure monitor (80) having a tire pressure detector (30) installed inside a tire (20), comprising:
a tire pressure detector (30) having a body (31), the body (31) being provided on a wheel rim (21) inside a tire (20), and a tire pressure monitor PCB (34) being provided in the body (31);
an air faucet (40) made of metal and provided at a front end of the tire pressure detector (30), the outside of the air faucet (40) being in the form of threads (44), a leakproof cushion (41) being set around the root, the air faucet (40) being clamped with a screw nut (42) after an external part of the air faucet (40) passes through a piercing hole (211) of the wheel rim (21) so that a first conducting hole (45) being axially formed, and the external part of the first conducting hole (45) is formed into a first connector (43);
an antenna connecting line (70) having both ends pass through the first conducting hole (45), and an inside end thereof electrically connecting an antenna contact (341) on the tire pressure monitor PCB (34);
an external air faucet (60) made of metal conductor, a second conducting hole (61) being axially provided in the external air faucet (60), the internal part of the second conducting hole (61) is formed into a second connector (62) corresponding to the first connector (43) of the first conducting hole (45), the second connector (62) and the first connector (43) being connected end to end, and electrically connecting an outside end of the antenna connecting line (70), and an air faucet bolt (63) being provided outside of the second conducting hole (61); and
an insulation sleeve (50) having an axial hole (51) and being provided between the first connector (43) and the second connector (62) in order to isolate the electrical transmission between the air faucet (40) and the external air faucet (60) so that the external air faucet (60) being formed to be an independent transmitting antenna (A) without an interference from the tire (20).

2. The tire pressure monitor (80) as claimed in claim 1, wherein the internal diameter of the first connector (43) is larger than the external diameter of the second connector (62) for the second connector (62) to extend into the internal diameter of the first connector (43), and the insulation sleeve (50) is fixed between the internal diameter of the first connector (43) and the external diameter of the second connector (62).

3. The tire pressure monitor (80) as claimed in claim 2, wherein the outer side surface of the insulation sleeve (50) has a flange (52) outward extended in a radial direction.

4. The tire pressure monitor (80) as claimed in claim 1, wherein the external diameter of the first connector (43a) is smaller than the internal diameter of the second connector (62a) for the first connector (43a) to extend into the internal diameter of the second connector (62a), and the insulation sleeve (50) is fixed between the external diameter of the first connector (43a) and the internal diameter of the second connector (62a).

5. The tire pressure monitor (80) as claimed in claim 4, wherein the outer side surface of the insulation sleeve (50) has a flange (52) inward extended in a radial direction.
